# EUROPEAN PATENT SPECIFICATION

(11) **EP 2 576 366 B1**
(45) Date of publication and mention of the grant of the patent: **31.08.2016**
(21) Application number: 11787555.9
(22) Date of filing: 31.05.2011
(51) Int. Cl.: B65D 6/00

(54) **KNOCK DOWN BARREL AND METHODS FOR ASSEMBLY**
ZERLEGBARES FASS UND VERFAHREN ZUR MONTAGE
BARIL DÉMONTABLE ET PROCÉDÉS D'ASSEMBLAGE

(30) Priority: 28.05.2010 US 349488 P
(43) Date of publication of application: 10.04.2013
(73) Proprietor: Display Technologies, Lake Success, NY 11042-1221 (US)
(72) Inventor: RILEY, Daniel, C., Hackensack NJ 07601 (US); LOVINSKY, Eleanor, Brooklyn NY 11211-4640 (US); BIDDISON, Mark, Long Beach NY 11561 (US); GOMMERMANN, Bruce, Northport NY 11768 (US); PIAZZA, David, Bronx NY 10465 (US); NEUMANN, Eric, North Hills NY 11040 (US)
(74) Representative: Beyer, Andreas
(86) International application number: PCT/US2011/038518
(87) International publication number: WO 2011/150414

(56) References cited:
- GB-A- 191 412 349
- US-A- 4 714 158
- US-A- 4 874 106
- US-A- 5 456 357
- US-A1- 2002 085 957
- US-A1- 2006 273 083
- US-A1- 2007 145 051
- US-A1- 2007 145 051
- US-A1- 2009 211 529

## Description

### CROSS-REFERENCE TO RELATED APPLICATIONS

The present application claims the benefit of and priority to U.S. Provisional Patent Application Serial No. 61/349,488 filed on May 28, 2010.

### BACKGROUND

The present disclosure relates to a barrel (e.g., an insulated storage container for storing products and/or making products available to a user) and methods for assembly, breaking down, packaging, and shipping thereof. Typically, such barrels are relatively light-weight and take up a lot of space. Therefore, shipping such barrels can be expensive, as they take up relatively large amounts of room on shipping vehicles.

The barrel of the present disclosure is comprised of components that are configured and dimensioned to be efficiently packed into a relatively small shipping box, for example. Additionally or alternatively, multiple barrels (e.g., three barrels) of the present disclosure are capable of being packed into a shipping box that would otherwise hold one assembled barrel. The reduction of size of the shipped barrel results in reduced shipping costs.

The barrel of the present disclosure can also be assembled and disassembled without the use of any tools. Such a tool-less assembly feature can be useful, for example, when the barrels are shipped to a grocery store, and a store clerk can quickly and easily assemble the barrels, such that the barrels are ready to store products.

US 2007/145051 A1 discloses a plurality of injection molded plastic panels having integrated connectors which are capable of being packaged and shipped in a knock-down state and constructed to form an aesthetically pleasing mobile cooler assembly.

### SUMMARY

The present disclosure relates to a storage container. The storage container comprises a plurality of side panels and a tub. Each side panel includes a first lateral edge and a second lateral edge. The first lateral edge includes at least one attachment mechanism, the first lateral edge being configured to mechanically engage a second lateral edge of an adjacent side panel. The tub is configured to be at least partially supported by an upper edge of each of the plurality of side panels. Each side panel is arcuate.

As a general example useful for understanding the invention, the present disclosure also relates to a method of tool-lessly assembling a storage container. The method comprises providing a first side panel, a second side panel, a third side panel, a tub and a base; connecting the first side panel and the second side panel by mechanically engaging an attachment mechanism on a first lateral side of the first side panel with a second lateral side of the second side panel; connecting the third side panel to the first side panel by mechanically engaging an attachment mechanism on a first lateral side of the third side panel with a second lateral side of the first side panel; connecting the second side panel to the third side panel by mechanically engaging an attachment mechanism on a first lateral side of the second side panel with a second lateral side of the third panel; inserting the tub at least partially within the connected first, second and third side panels; and mechanically engaging the base with a lower portion of the connected first, second and third side panels.

### BRIEF DESCRIPTION OF DRAWINGS

Embodiments of the present disclosure are described hereinbelow with reference to the drawings wherein:
Figures 1 - 3 are perspective views of the barrel;
Figure 4 is a front view of the barrel;
Figure 5 is an assembly view of the barrel;
Figure 6 is a perspective view of portions of two side panels of the barrel;
Figure 7 is a partial assembly view of the barrel;
Figure 8 is an assembly view of a tub of the barrel;
Figure 9 is a partial assembly view of a portion of the barrel; and
Figure 10 is a perspective view of the barrel with a side panel removed.

### DETAILED DESCRIPTION

Embodiments of the presently disclosed knock-down barrel are described in detail with reference to the drawings wherein like numerals designate identical or corresponding elements in each of the several views.

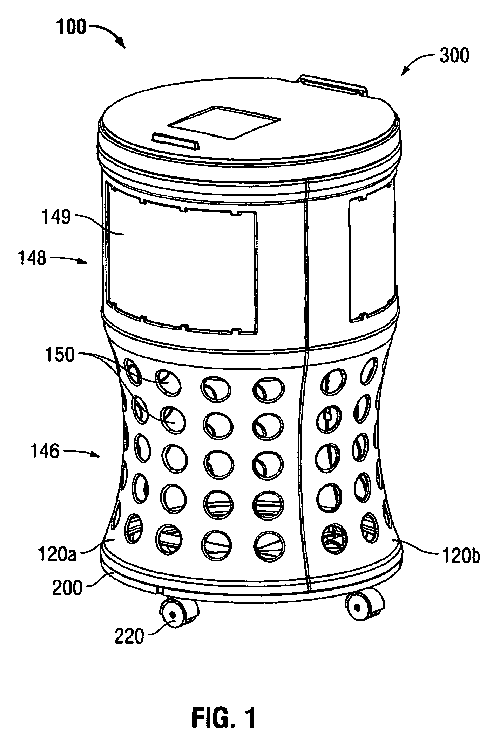

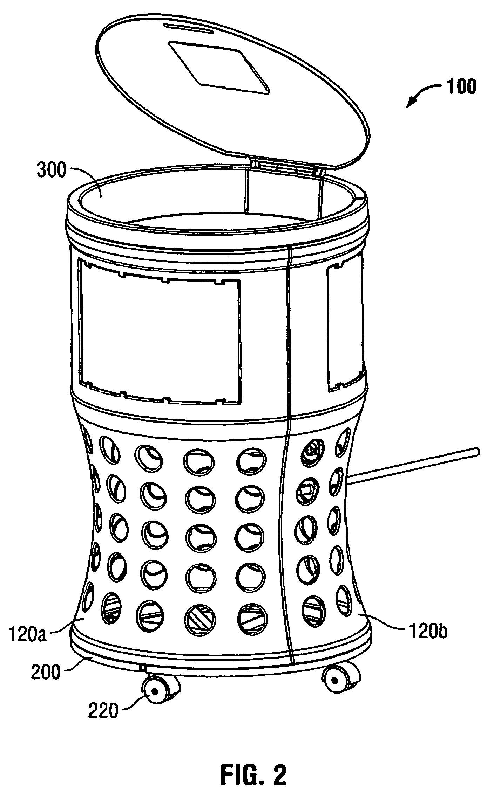

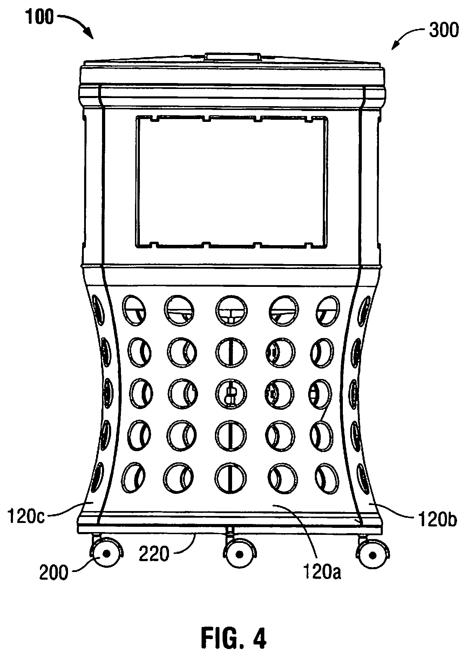

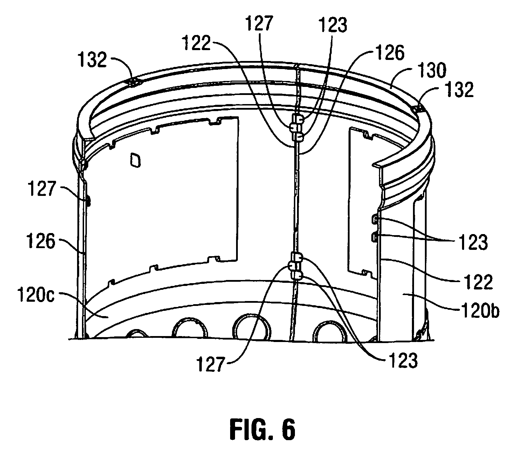

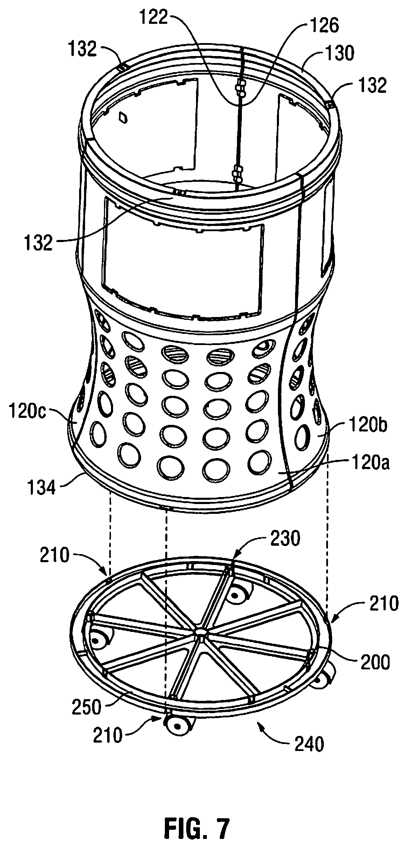

In combination with the accompanying Figures 1-10, a storage container or knock down barrel 100 of the present disclosure is described herein. Barrel 100 is configured to be assembled and disassembled without the use of tools, and its various components are configured to minimize space, e.g., when being shipped.

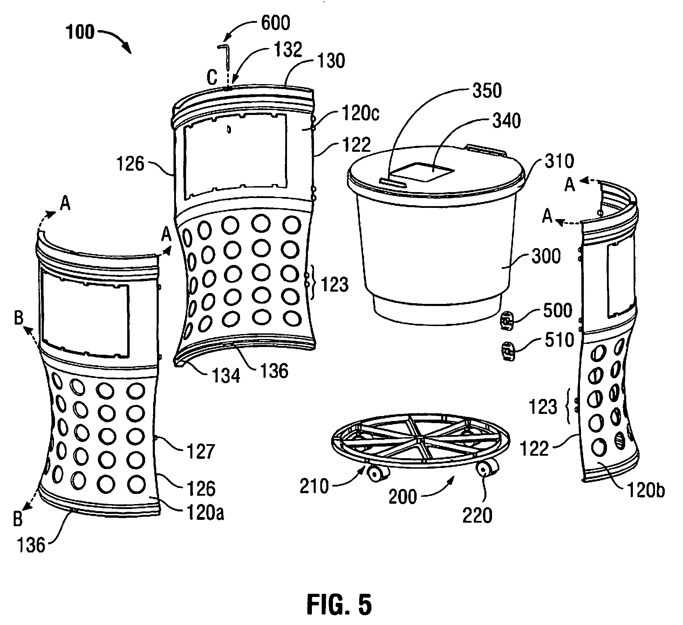

Barrel 100 includes a plurality of side panels 120 (e.g., three side panels 120a, 120b, 120c as shown in FIG. 5, for example), a base 200, and a tub 300. Each of the side panels 120 is configured to interconnect with an adjacent side panel 120. Base 200 is configured to connect to a lower portion of each side panel 120. Tub 300 is configured to fit at least partially within the assembled side walls 120 and to connect thereto. Additionally, tub 300 is configured to stack within another tub (not shown).

Referring now to FIGS. 5-7 and 10, further details of side panel 120 are described herein. Side panel 120 includes an arcuate shape, as indicated by the curved axis "A-A" in FIG. 5. The arcuate configuration of side panels 120 allows sides panel 120a to be stacked on top of/within an adjacent side panel 120b, such that axis "A-A" of side panel 120a is substantially parallel to axis "A-A" of side panel 120b. Accordingly, a plurality of side panels 120 can be stacked adjacent one another. For example, nine side panels 120 (for use with three separate barrels 100) can be stacked and can fit into a single shipping box. As shown, side panels 120 are also curved along axis "B-B."

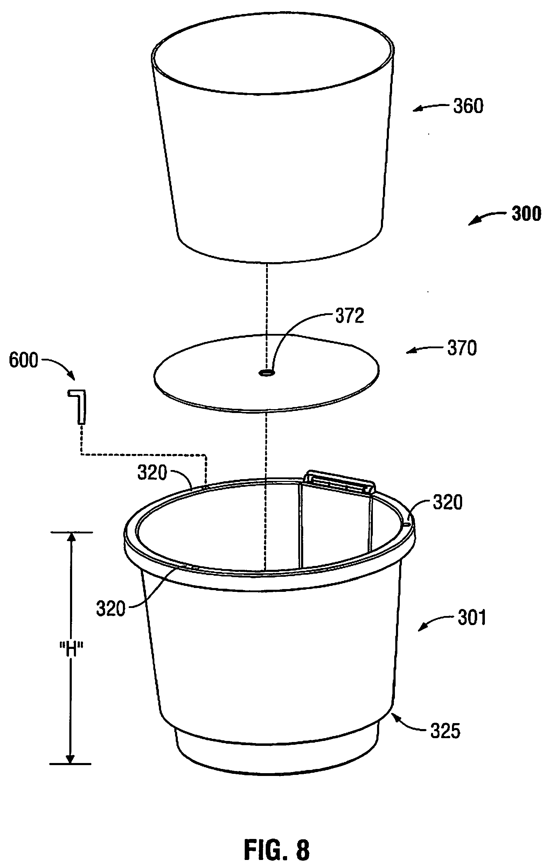

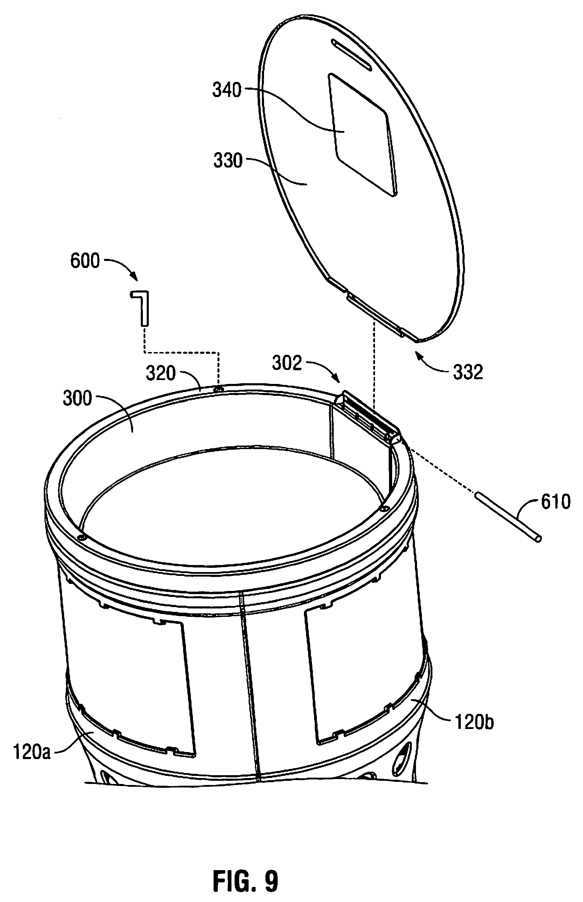

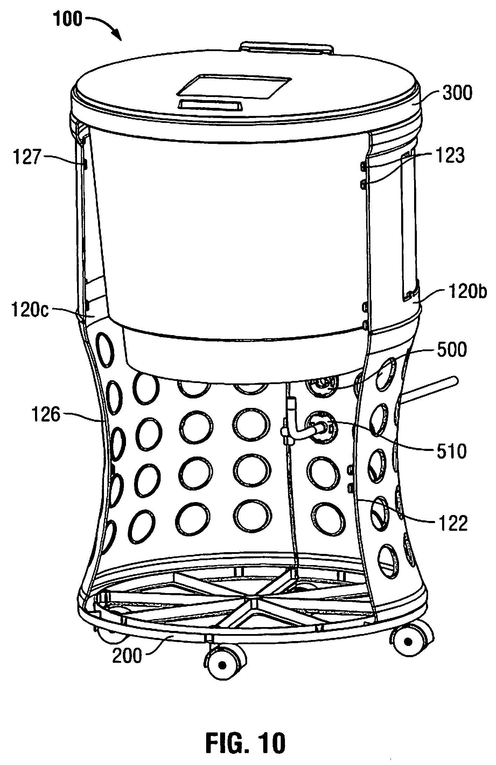

Side panels 120 include a first lateral edge 122, a second lateral edge 126, an upper edge 130, and a lower edge 134. First lateral edge 122 includes a plurality of attachment mechanisms or projections 123. Second lateral edge 126 includes a plurality of attachment mechanisms 127. For example, first lateral edge 122 can include three spaced-apart pairs of projections 123, and second lateral edge 126 can include three spaced-apart single projections 127 (see FIG. 10). In such an embodiment each single projection 127 can fit between pair of projections 123 and frictionally remain in place. It is envisioned that at least one attachment mechanism 123, 127 is stationary or substantially stationary with respect to its corresponding side panel 120. It is further envisioned that attachment mechanisms 123 can tool-lessly engage attachment mechanisms 127 (e.g., via a snap-fit connection). Additionally, attachment mechanisms 123 can be configured to engage second lateral edge 126 (in the absence of any attachment mechanism thereon). Upper edge 130 of side panels 130 is configured to support a lip 310 of tub 300. Additionally, each side panel 120 includes an opening 132 along upper edge 130, which is configured to accept a mechanical fastener, e.g., a pin 600, at least partially therethrough. More particularly, pin 600 is insertable in the general direction of arrow "C" in FIG. 5 through an opening 320 of tub 300 and through opening 132 of each side panel 120 (see also FIGS. 8 and 9). Only a single pin 600 is shown for clarity.

Lower edge 134 of side panel 120 includes structure 136 (e.g., a groove, slot, recess, opening, protrusion, etc.) that is configured to be mechanically coupled to a corresponding feature 210 (e.g., a groove, slot, recess, opening, protrusion, etc.) of base 200, e.g., via a snap-fit connection.

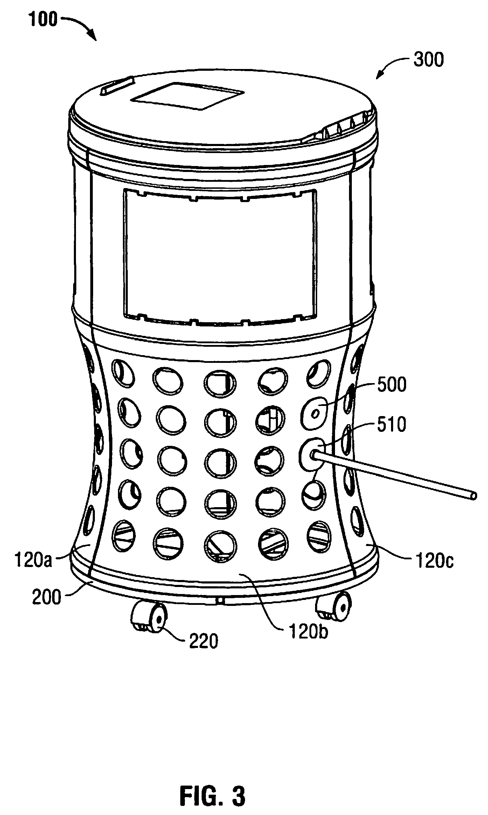

A lower section 146 of side walls 120 includes a plurality of openings 150 extending therethrough. The illustrated embodiment includes five rows and five columns of circular openings 150, for a total of 25 openings 150 per side wall 120. Openings 150 may be used to reduce the weight of side wall 120, to see through side wall 120, to access an interior of barrel 100, and for attachment of adaptors (e.g., a drain adaptor 500, a spigot adaptor 510, etc.), for instance (see FIGS. 3,5 and 10). Any number, size and shape of openings 150 are contemplated by the present disclosure.

An upper section 148 of side walls 120 includes a window 149 thereon. It is envisioned that window 149 is open (i.e., lacks material) or that window 149 is comprised of a translucent or transparent material. Window 149 may be used to display product information, for example.

Base 200 is round and includes four casters 220. It is envisioned that each caster 220 (e.g., a finger thereof) can be snapped into engagement with a corresponding hole 230 disposed on a lower surface 240 of base 200. Additionally, base 200 includes a lip 250 therearound, which is configured for engagement with lower edges 134 of each side panel 120.

Tub 300 includes a generally tapered shape to facilitate stacking into another tub. That is, tub 300 is tapered along at least a majority of its height "H." Tub 300 also includes a cover 330, which is pivotably attached thereto via a connector bar 610. That is, connector bar 610 is insertable through an opening 332 in cover 330 and through an opening 302 in tub 300. Other suitable methods of connecting cover 330 and tub 300 are also within the scope of the present disclosure. In the illustrated embodiment, cover 330 includes a window 340 thereon. It is envisioned that window 340 allows a user to see products within tub 300. A handle 350 on cover 330 facilitates the pivoting (opening and closing) of cover 330 with respect to remainder of tub 300.

With regard to Figure 8, tub 300 also includes a tub base 301, wall liner 360 and a reservoir disc 370. Reservoir disc 370 includes a hole 372 therein, which is configured to align with a corresponding hole (not shown) through bottom of tub 300. It is envisioned that a drain can engage hole 372, e.g., to drain water from tub 300.

As discussed above, assembly of barrel 100 can be accomplished without the use of any tools. Initially, two side panels 120a, 120b are interlocked by engaging attachment mechanisms 123 from first lateral edge 122 of side panel 120a with attachment mechanisms 127 from second lateral edge 126 of side panel 120b. Next, side panel 120c is interlocked with side panels 120a, 120b by engaging attachment mechanisms 123 from first lateral edge 122 of side panel 120b with attachment mechanisms 127 from second lateral edge 126 of side panel 120c, and by engaging attachment mechanisms 127 from second lateral edge 126 of side panel 120a with attachment mechanisms 123 from first lateral edge of side panel 120c.

Next tub 300 is assembled by placing wall liner 360 into tub base 301. The assembled tub 300 is then placed into side panels 120a, 120b, 120c, such that lip 310 of tub 300 rests on upper edge 130 of side walls 120. Pins 600 may then be inserted through opening 320 of tub 300 and through opening 132 of side panels 120a-120c.

The user may then turn tub 300 and side panels 120 up-side-down, such that lower edge 134 of side panels 120 is facing upward. Additionally, drain adaptor 500 and/or spigot adaptor 510 may be inserted into desired location in side panel 120 and/or connected to tub 300 via the hole therein.

Base 200 is inserted onto side panels 120a-120c such that structure 136 of lower edges 134 of side panels 120 mechanically engage feature 210 of base 200. Casters 220 are then snapped into engagement with corresponding holes 230 on lower surface 240 of base 200.

Barrel 100 may then be turned right-side-up, such that upper edge 130 is facing upward. Connector bar 610 is then inserted through opening 332 in cover 330 and through opening 302 in tub 300. Alternatively, connector bar 610 may be inserted into a snap bar of tub 300.

Finally, reservoir disc 370 is placed onto a ledge 325 of tub 300.

As can be appreciated, barrel 100 can be tool-lessly disassembled, e.g., in the opposite order of assembly.

While the assembly steps of the present disclosure are described as being in a particular order, the present disclosure also contemplates assembling barrel 100 in other orders. Additionally, while an embodiment of the disclosure has been shown in the figures and described herein, it is not intended that the disclosure be limited thereto, as it is intended that the disclosure be as broad in scope as the art will allow and that the specification be read likewise. For example, while three side panels are shown, it is envisioned that more or fewer side panels are used without departing from the scope of the present disclosure. Therefore, the above description should not be construed as limiting, but merely as exemplifications of various embodiments. Those skilled in the art will envision other modifications within the scope and spirit of the claims appended hereto.

## Claims

1. A storage container (100) comprising:
a plurality of side panels (120), each side panel (120) including a first lateral edge (122) and a second lateral edge (126), the first lateral edge (122) including at least one attachment mechanism (123), the first lateral edge (122) being configured to mechanically engage a second lateral edge (126) of an adjacent side panel (120); and
a tub (300) configured to be at least partially supported by an upper edge (130) of each of the plurality of side panels,
**characterized in that** each side panel (120) is arcuate.

2. The storage container (100) of Claim 1, wherein the plurality of side panels (120) includes three side panels (120a, 120b, 120c).

3. The storage container (100) of Claim 1, further comprising a plurality of mechanical fasteners (600), each mechanical fastener (600) being configured for insertion through a portion of the tub (300) and a through an upper edge (130) of each side panel (120).

4. The storage container (100) of Claim 1, wherein the tub (300) is tapered along at least a majority of its height.

5. The storage container (100) of Claim 1, wherein the at least one attachment mechanism (123) of the first lateral edge (122) of one of the side panels (120) is configured to mechanically engage an attachment mechanism (123) disposed on the second lateral edge (126) of the adjacent side panel (120), such that each side panel (120) includes at least one attachment mechanism (123) on its first lateral edge (122) and at least one attachment mechanism (123) on its second lateral edge (126).

6. The storage container (100) of Claim 5, wherein at least one of the attachment mechanism (123) of the first lateral edge (122) and the attachment mechanism (123) on the second lateral edge (126) is stationary with respect to the side panel (120).

7. The storage container (100) of Claim 5, further comprising a base (200) configured to mechanically engage a lower edge (134) of each of the side panels (120).

8. The storage container (100) of claim 1, wherein the plurality of side panels (120) includes only three side panels (120a, 120b, 120c).

## Patentansprüche

1. Aufbewahrungsbehälter (100), mit:
mehreren Seitenwänden (120), wobei jede Seitenwand (120) einen ersten Seitenrand (122) und einen zweiten Seitenrand (126) aufweist, wobei der erste Seitenrand (122) zumindest einen Befestigungsmechanismus (123) umfasst, wobei der erste Seitenrand (122) dazu ausgeführt ist, mechanisch in Eingriff mit einem zweiten Seitenrand (126) einer angrenzenden Seitenwand (120) zu treten, und
einem Bottich (300), der dazu ausgeführt ist, wenigstens teilweise von einem oberen Rand (130) jeder der mehreren Seitenwände abgestützt zu werden,
**dadurch gekennzeichnet, dass** jede Seitenwand (120) bogenförmig gekrümmt ist.

2. Aufbewahrungsbehälter (100) nach Anspruch 1, bei dem die mehreren Seitenwände (120) drei Seitenwände (120a, 120b, 120c) umfassen.

3. Aufbewahrungsbehälter (100) nach Anspruch 1, ferner umfassend mehrere mechanische Befestigungselemente (600), wobei jedes mechanische Befestigungselement (600) zur Einführung durch ein Teil des Bottichs (300) und durch einen oberen Rand (130) jeder Seitenwand (120) ausgeführt ist.

4. Aufbewahrungsbehälter (100) nach Anspruch 1, bei dem der Bottich (300) entlang zumindest eines Großteils seiner Höhe kegelstumpfartig ist.

5. Aufbewahrungsbehälter (100) nach Anspruch 1, bei dem der zumindest eine Befestigungsmechanismus (123) des ersten Seitenrands (122) eines der Seitenwände (120) dazu ausgeführt ist, mechanisch mit einem Befestigungsmechanismus (123) in Eingriff zu treten, der am zweiten Seitenrand (126) der angrenzenden Seitenwand (120) angeordnet ist, derart, dass jede Seitenwand (120) zumindest einen Befestigungsmechanismus (123) an ihrem ersten Seitenrand (122) und zumindest einen Befestigungsmechanismus (123) an ihrem zweiten Seitenrand (126) aufweist.

6. Aufbewahrungsbehälter (100) nach Anspruch 5, bei dem der Befestigungsmechanismus (123) des ersten Seitenrands (122) und/oder der Befestigungsmechanismus (123) am zweiten Seitenrand (126) bezüglich der Seitenwand (120) feststehend ist.

7. Aufbewahrungsbehälter (100) nach Anspruch 5, ferner umfassend ein Unterteil (200), das dazu ausgeführt ist, mechanisch mit einem unteren Rand (134) von jeder der Seitenwände (120) in Eingriff zu treten.

8. Aufbewahrungsbehälter (100) nach Anspruch 1, bei dem die mehreren Seitenwände (120) nur drei Seitenwände (120a, 120b, 120c) umfassen.

## Revendications

1. Récipient (100) de stockage comprenant :
une pluralité de panneaux (120) latéraux, chaque panneau (120) latéral comprenant un premier bord (122) latéral et un second bord (126) latéral, le premier bord (122) latéral comprenant au moins un mécanisme (123) de fixation, le premier bord (122) latéral étant configuré pour mettre en prise mécaniquement un second bord (126) latéral d'un panneau (120) latéral adjacent ; et
un tube (300) configuré au moins partiellement pour être supporté par un bord (130) supérieur de chacun de la pluralité de panneaux latéraux,
**caractérisé en ce que** chaque panneau (120) latéral est arqué.

2. Récipient (100) de stockage selon la revendication 1, dans lequel la pluralité de panneaux (120) latéraux comprend trois panneaux (120a, 120b, 120c) latéraux.

3. Récipient (100) de stockage selon la revendication 1, comprenant en outre une pluralité de fixations (600) mécaniques, chaque fixation (600) mécanique étant configurée pour une insertion à travers une partie du tube (300) et à travers un bord (130) supérieur de chaque panneau (120) latéral.

4. Récipient (100) de stockage selon la revendication 1, dans lequel le tube (300) est conique le long au moins de la majeure partie de sa hauteur.

5. Récipient (100) de stockage selon la revendication 1, dans lequel l'au moins un mécanisme (123) de fixation du premier bord (122) latéral d'un des panneaux (120) latéraux est configuré pour mettre en prise mécaniquement un mécanisme (123) de fixation disposé sur le second bord (126) latéral du panneau (120) latéral adjacent, de telle sorte que chaque panneau (120) latéral comprend au moins un mécanisme (123) de fixation sur son premier bord (122) latéral et au moins un mécanisme (123) de fixation sur son second bord (126) latéral.

6. Récipient (100) de stockage selon la revendication 5, dans lequel au moins l'un du mécanisme (123) de fixation du premier bord (122) latéral et du mécanisme (123) de fixation sur le second bord (126) latéral est fixe par rapport au panneau (120) latéral.

7. Récipient (100) de stockage selon la revendication 5, comprenant en outre une base (200) configurée pour mettre en prise mécaniquement un bord (134) inférieur de chacun des panneaux (120) latéraux.

8. Récipient (100) de stockage selon la revendication 1, dans lequel la pluralité de panneaux (120) latéraux comprend seulement trois panneaux (120a, 120b, 120c) latéraux.
